# EUROPÄISCHE PATENTSCHRIFT

(11) **EP 1 431 158 B1**
(45) Veröffentlichungstag und Bekanntmachung des Hinweises auf die Patenterteilung: **29.11.2006**
(21) Anmeldenummer: 03028904.5
(22) Anmeldetag: 17.12.2003
(51) Int. Cl.: B61L 15/02, B61D 29/00, F21S 8/10, F21V 14/00

(54) **Signal- und Fahrlichtscheinwerfer für Schienenfahrzeuge**
Headlamp and signaling lights for a railway vehicle.
Phare et feu de signalisation pour véhicule ferroviaire.

(30) Priorität: 17.12.2002 DE 10261008
(43) Veröffentlichungstag der Anmeldung: 23.06.2004
(73) Patentinhaber: Pintsch Bamag Antriebs- und Verkehrstechnik GmbH, 46537 Dinslaken (DE)
(72) Erfinder: Krause, Werner, Dipl.-Ing. (TH), 46535 Dinslaken (DE)
(74) Vertreter: Patentanwälte Ruff, Wilhelm, Beier, Dauster & Partner

(56) Entgegenhaltungen:
- EP-A- 1 195 311
- EP-A- 1 270 324
- US-A- 5 685 637
- US-B1- 6 414 801

## Beschreibung

Die Erfindung betrifft einen kombinierten Signal- und Fahrlichtscheinwerfer für Schienenfahrzeuge mit wenigstens einem ersten Leuchtmittel zum Abstrahlen von Fahrlicht einer ersten Leuchtstärke mit einer ersten Hauptabstrahlrichtung, mehreren zweiten, als lichtemittierende Dioden ausgebildeten Leuchtmitteln zum Abstrahlen von Signallicht mit einer zweiten, geringeren Leuchtstärke mit einer zweiten Hauptabstrahlrichtung, die von der ersten Hauptabstrahlrichtung verschieden ist. Die zweiten lichtemittierenden Dioden sind auf einer Leiterplatte, eine Öffnung in der Leiterplatte umgebend angeordnet. Das Fahrlicht wird durch das erste Leuchtmittel aus einem, in der zweiten Hauptabstrahlrichtung gesehen, von den zweiten Leuchtmitteln umgebenen Fahrlichtabstrahlbereich abgestrahlt.

In der US-Patentschrift US 5,685,637 ist ein Leuchtensystem beschrieben, das eine Halogenlampe und einen mit LEDs bestückten und eine Leiterplatte aufweisenden Ringaufbau aufweist. Die Halogenlampe und die LEDs erzeugen unterschiedliche Leuchtstärken beziehungsweise strahlen Licht unterschiedlicher Wellenlänge ab. Die Halogenlampe ist derart im Bereich eines Reflektors des Leuchtensystems angeordnet, dass eine Hauptabstrahlrichtung der Halogenlampe sowie des vom Reflektor reflektierten Lichtes durch den Ringaufbau weisend ausgerichtet ist. Die Abstrahlrichtungen des Aufbaus mit der Halogenlampe und der LEDs, die unter Linsen angeordnet sind, sowie die der LEDs sind gleich, wobei die LEDs ein Streulicht zur Beleuchtung eines möglichst großen Bereichs erzeugen.

In der US-Patentschrift US 6,414,801 ist eine Anordnung von LEDs für eine Tageslichtleuchte beschrieben. Dabei wird in einem paraboloiden Reflektor ein zweiter, weitaus kleinerer Reflektor angebracht. Dieser zweite Reflektor ist auf seiner konvexen Seite reflektierend beschichtet. Sowohl über der konvexen Seite des zweiten Reflektors als auch innerhalb des zweiten Reflektors sind LEDs angeordnet. Mittels dieses Aufbaus soll die Abführung der durch die LEDs verursachten Wärme verbessert werden.

Aus der europäischen Offenlegungsschrift EP 1 195 311 A1 ist eine Signalleuchte für ein Schienenfahrzeug bekannt. Die Signalleuchte weist als Leuchtmittel mehrere Leuchtdioden auf. In der Signalleuchte können Leuchtdioden für verschiedene Farben vorhanden sein. Die Leuchtdioden können um eine Aussparung für einen Scheinwerfer herum angeordnet sein. Der in der Aussparung angeordnete Scheinwerfer kann z.B. ein Linsenscheinwerfer mit einer Halogenglühlampe sein. Dadurch können der Scheinwerfer für Abblendlicht und die Signalleuchte räumlich kombiniert werden.

Aus dem amerikanischen Patent US 4,654,629 ist eine Signalleuchte für Schienenfahrzeuge bekannt, die mehrere lichtemittierende Dioden aufweist und bei der Linsen vorgesehen sind, um einen Lichtstrahl mit der gewünschten Abstrahlcharakteristik zu erreichen. Die Linsen können als Fresnel-Linsen ausgebildet sein. Zur Erzielung einer gewünschten Abstrahlrichtung können die lichtemittierenden Dioden zu einer gewünschten Abstrahlrichtung geneigt angeordnet sein.

Aus dem deutschen Gebrauchsmuster DE 296 12 300 U1 sind Signalleuchten für schienengebundene Fahrzeuge bekannt, die als Leuchtmittel lichtemittierende Dioden aufweisen. Die lichtemittierende Dioden werden auf einer Leiterplatte montiert und bilden einen Leuchtkreis. Abhängig vom Einsatzort als Spitzenlicht oder Schlusslicht können weiße, gelbe bzw. rote lichtemittierende Dioden eingesetzt werden.

Aus dem deutschen Gebrauchsmuster DE 200 12 815 U1 ist eine Zugschlussleuchte mit LED-Einsatz bekannt, bei der rote und weiße LEDs zentrisch hinter einer roten Abdeckscheibe angeordnet sind. Die LEDs sind in einem Einsatz angeordnet, der anstelle konventioneller Leuchtmittel in einer Zugschlussleuchte nachgerüstet werden kann.

Mit der Erfindung soll ein kombinierter Signal- und Fahrlichtscheinwerfer für Schienenfahrzeuge geschaffen werden, der bei hoher Ausfallsicherheit ein gleichmäßiges Signalbild gewährleistet.

Erfindungsgemäß ist hierzu ein ein kombinierter Signal- und Fahrlichtscheinwerfer für Schienenfahrzeuge mit wenigstens einem ersten Leuchtmittel zum Abstrahlen von Fahrlicht einer ersten Leuchtstärke mit einer ersten Hauptabstrahlrichtung, mehreren zweiten, als lichtemittierende Dioden ausgebildeten Leuchtmitteln zum Abstrahlen von Signallicht mit einer zweiten, geringeren Leuchtstärke mit einer zweiten Hauptabstrahlrichtung, die von der ersten Hauptabstrahlrichtung verschieden ist vorgesehen. Die zweiten lichtemittierenden Dioden sind auf einer Leiterplatte, eine Öffnung in der Leiterplatte umgebend angeordnet. Das Fahrlicht wird durch das erste Leuchtmittel aus einem, in der zweiten Hauptabstrahlrichtung gesehen, von den zweiten Leuchtmitteln umgebenen Fahrlichtabstrahlbereich abgestrahlt. Das wenigstens eine erste Leuchtmittel ist als lichtemittierende Diode ausgebildet und mit einer Optik versehen, die in einem Bereich der Öffnung der Leiterplatte angeordnet ist. Es sind Mittel vorgesehen, um im Signallichtbetrieb eine Lichtabstrahlung im Fahrlichtabstrahlbereich in der zweiten Hauptabstrahlrichtung zu erzielen.

Auf diese Weise kann bei einem kombinierten Signal- und Fahrlichtscheinwerfer im Signallichtbetrieb ein gutes Signalbild mit einer gleichmäßig ausgeleuchteten Signallichtfläche, üblicherweise eine Signalscheibe, erreicht werden. Speziell wird der bei konventionellen kombinierten Signal- und Fahrlichtscheinwerfern vorhandene dunkle Bereich im Signallichtbetrieb vermieden, der dadurch verursacht ist, dass das Leuchtmittel für den Fahrlichtbetrieb Licht in einer anderen Richtung abstrahlt als für den Signallichtbetrieb erforderlich ist. Beispielsweise können einklappbare Spiegel, Reflektoren oder Durchlichtoptiken verwendet werden, um im Signallichtbetrieb die gewünschte Lichtabstrahlung zu erreichen.

Durch die Anordnung der Optik in der Öffnung der Leiterplatte ist der Fahrlichtabstrahlbereich durch die Öffnung der Leiterplatte sowie durch die zweckmäßigerweise in der Öffnung montierte Optik definiert. Insgesamt lässt sich durch diese Maßnahmen ein kompakter Aufbau des kombinierten Signal- und Fahrlichtscheinwerfers erreichen.

In Weiterbildung der Erfindung ist die wenigstens eine erste lichtemittierende Diode relativ zu den zweiten lichtemittierenden Dioden verschieb- und/oder verschwenkbar angeordnet.

Auf diese Weise kann im Signallichtbetrieb eine Änderung der Abstrahlrichtung der für das Fahrlicht vorgesehenen ersten lichtemittierenden Diode erreicht werden. Für den Signallichtbetrieb wird zweckmäßigerweise die Stromstärke, mit der die erste lichtemittierende Diode betrieben wird, verringert, um eine gleichmäßige Leuchtdichte über die gesamte Lichtaustrittsöffnung zu erreichen.

In Weiterbildung der Erfindung ist im Bereich der ersten lichtemittierenden Diode eine dritte lichtemittierende Diode zum Abstrahlen von Signallicht parallel zur zweiten Hauptabstrahlrichtung im Fahrlichtabstrahlbereich vorgesehen.

Auch durch diese Maßnahme wird sichergestellt, dass im Signallichtbetrieb ein Lichtaustritt aus dem Fahrlichtabstrahlbereich in der zweiten Hauptabstrahlrichtung erfolgt, so dass ein gleichmäßiges Signalbild gewährleistet ist. Beispielsweise ist ein gleichzeitiger Signallicht- und Fahrlichtbetrieb möglich. Bei der Anordnung der dritten lichtemittierenden Diode ist darauf zu achten, dass im Fahrlichtbetrieb keine Abschattung der ersten lichtemittierenden Diode und somit eine Beeinträchtigung des abgestrahlten Fahrlichts auftritt.

In Weiterbildung der Erfindung sind die zweiten lichtemittierenden Dioden konzentrisch angeordnet, wobei am äußeren Rand mehrere lichtemittierende Dioden in einem Winkel zur zweiten Hauptabstrahlrichtung angeordnet oder es sind Mittel wie Spiegel, Lichtleitstäbe oder sonstige Optiken vorgesehen, um Licht im gewünschten Winkel abzustrahlen.

Durch diese Maßnahme lässt sich eine Ausleuchtung in bestimmten, geforderten Winkeln im Signallichtbetrieb erreichen, beispielsweise eine Erkennbarkeit der Signalscheibe unter einem Winkel von +/- 45° zur Fahrtrichtung.

In Weiterbildung der Erfindung sind Mittel zum Betreiben der lichtemittierenden Dioden mit veränderlicher Stromstärke vorgesehen.

Durch Betreiben mit veränderlicher Stromstärke lassen sich die lichtemittierende Dioden für verschiedene Lichtfunktionen, beispielsweise Signallicht, Signallicht abgeblendet und Fahrlicht, verwenden.

In Weiterbildung der Erfindung weisen die zweiten lichtemittierenden Dioden farbiges Licht abstrahlende lichtemittierende Dioden auf.

Dadurch können beispielsweise verschiedenfarbige Signallichter realisiert werden. Dies ist speziell dann sinnvoll, wenn ein Signallicht abhängig von der Fahrtrichtung des Schienenfahrzeugs als Front- oder Heckleuchte verwendet werden soll.

In Weiterbildung der Erfindung sind bei Signallicht- oder Fahrlichtbetrieb mit weißem Licht zusätzlich rotes Licht und/oder grünes Licht emittierende Dioden eingeschaltet.

Beispielsweise können im Signallichtbetrieb oder Fahrlichtbetrieb mit weißem Licht speziell rote Spektralanteile zugemischt werden, durch die sich die Erkennbarkeit von Retroreflexsignalen verbessern lässt. Allgemein kann der Farbort des abgestrahlten Lichts verändert und auf spezielle Anforderungen abgestimmt werden.

Das der Erfindung zugrundeliegende Problem wird auch durch einen Signal- und Fahrlichtscheinwerfer für Schienenfahrzeuge mit wenigstens einem ersten Leuchtmittel zum Abstrahlen von Fahrlicht einer ersten Leuchtstärke mit einer ersten Hauptabstrahlrichtung, mehreren zweiten, als lichtemittierende Dioden ausgebildeten Leuchtmitteln zum Abstrahlen von Signallicht mit einer zweiten, geringeren Leuchtstärke mit einer zweiten Hauptabstrahlrichtung, die von der ersten Hauptabstrahlrichtung verschieden ist, gelöst, bei dem das wenigstens eine erste Leuchtmittel als lichtemittierende Diode ausgebildet, mit einer Optik versehen und mit den zweiten lichtemittierenden Dioden in einem gemeinsamen Gehäuse angeordnet ist.

Auf diese Weise lässt sich ein sehr kompakter, kombinierter Signal- und Fahrlichtscheinwerfer realisieren. Konventionelle kombinierte Signal- und Fahrlichtscheinwerfer verwenden für die Abstrahlung von Fahrlicht Halogenglühlampen, die im Betrieb erhebliche Wärmemengen erzeugen. Lichtemittierende Dioden, speziell weiße Leuchtdioden, lassen einen Betrieb mit vollem Strom und damit voller Lichtstärke nur bis etwa 40°C zu. Wird die lichtemittierende Diode bei höheren Temperaturen mit ihrer Nennleistung betrieben, sinkt die Lebensdauer drastisch. Üblicherweise werden Halogenglühlampen daher in einem eigenen, gekühlten Gehäuse angeordnet. Der Kühlungsaufwand ist bei solchen kombinierten Signal- und Fahrlichtscheinwerfern erheblich. Durch die erfindungsgemäße Anordnung der Leuchtdioden für Fahrlicht- und Signallichtbetrieb wird ein kombinierter Signallicht- und Fahrlichtscheinwerfer mit gegenüber dem Stand der Technik deutlich vereinfachtem Aufbau geschaffen. Ohne aufwendige Kühlungsmaßnahmen wird eine hohe Lebensdauer der verwendeten Leuchtdioden erzielt.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. In den Zeichnungen zeigen:
- Fig. 1: eine Vorderansicht eines erfindungsgemäßen kombinierten Signal- und Fahrlichtscheinwerfers gemäß einer ersten Ausführungsform,
- Fig. 2: eine Vorderansicht eines kombinierten Signal- und Fahrlichtscheinwerfers gemäß einer zweiten Ausführungsform,
- Fig. 3: eine seitliche Schnittansicht eines erfindungsgemäßen kombinierten Signal- und Fahrlichtscheinwerfers gemäß einer dritten Ausführungsform,
- Fig. 4: eine seitliche Schnittansicht eines kombinierten erfindungsgemäßen Signal- und Fahrlichtscheinwerfers gemäß der verbesserten dritten Ausführungsform,
- Fig. 5: eine seitliche Schnittansicht eines erfindungsgemäßen Scheinwerfers gemäß einer vierten Ausführungsform,
- Fig. 6: eine seitliche Schnittansicht eines kombinierten Signal- und Fahrlichtscheinwerfers gemäß einer fünften Ausführungsform der Erfindung,
- Fig. 7: eine seitliche Schnittansicht eines erfindungsgemäßen Scheinwerfers gemäß einer sechsten Ausführungsform der Erfindung,
- Fig. 8: eine seitliche. Schnittansicht eines erfindungsgemäßen Scheinwerfers gemäß einer siebten Ausführungsform,
- Fig. 9: eine seitliche Schnittansicht eines erfindungsgemäßen Scheinwerfers gemäß einer achten Ausführungsform,
- Fig. 10: eine Verteilung der Lichtstärke einer Leuchtdiode des Scheinwerfers der Fig. 9 und
- Fig. 11: eine Spektralverteilung einer weiteren Leuchtdiode des Scheinwerfers der Fig. 10.

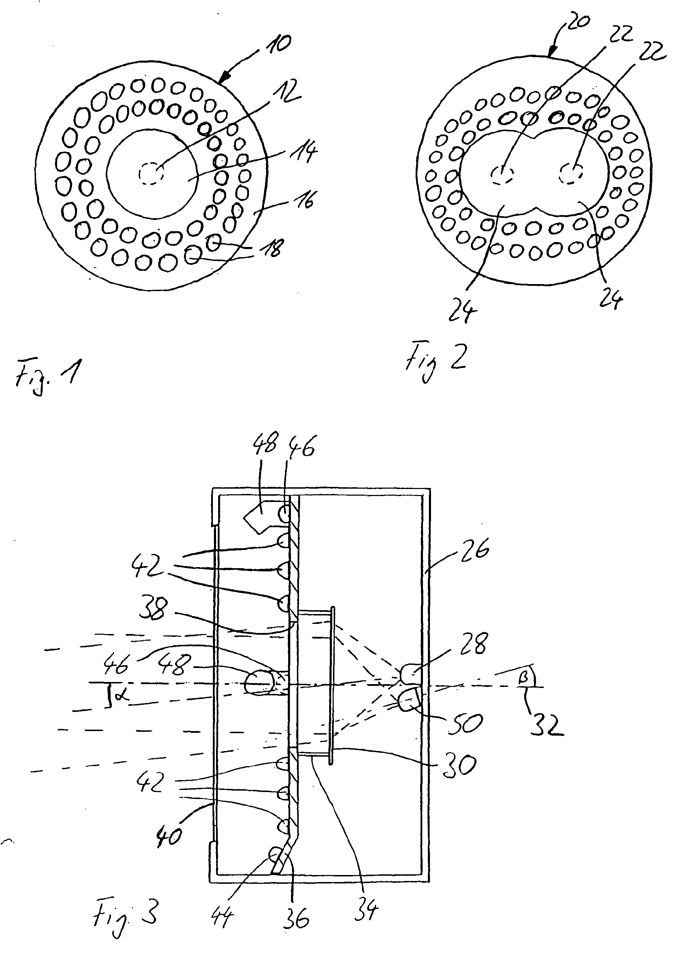

Die Vorderansicht der Fig. 1 zeigt einen kombinierten Signal- und Fahrlichtscheinwerfer 10, der zum Abstrahlen von Fahrlicht eine erste lichtemittierende Diode 12 aufweist, die hinter einer Sekundäroptik 14 angeordnet ist und in der Fig. 1 daher lediglich gestrichelt angedeutet dargestellt ist. Die erste lichtemittierende Diode 12 ist eine sogenannte Hochleistungs-LED, die weißes Licht abstrahlt und mit einer Primäroptik versehen ist. Mittels der Sekundäroptik wird eine Abstrahlung des Fahrlichts in einer gewünschten ersten Hauptabstrahlrichtung erreicht. Bei Schienenfahrzeugen ist dies üblicherweise ein Winkel von 5,5° von einer Längsachse des Schienenfahrzeugs nach unten. Die Sekundäroptik 14 kann als Konvex-, Plankonvexlinse, als Freiformoptik oder als Fresnel-Optik ausgebildet sein. Bei Verwendung einer Fresnel-Optik ist der Einsatz einer sogenannten Mikrostrukturoptik empfehlenswert, da solche Mikrostrukturoptiken dünner als andere Optiken ausgeführt werden können und somit bezüglich der inneren Lichtabsorption günstigere Eigenschaften haben.

Um den gewünschten Abstrahlwinkel zu erzielen, kann entweder die erste LED 12 gegenüber einer optischen Achse der Sekundäroptik 14 nach oben verschoben werden. Alternativ kann die Sekundäroptik 14 geneigt werden, wobei dann gleichzeitig die erste LED 12 mitgeschwenkt werden sollte, um weiterhin auf der optischen Achse der Sekundäroptik 14 angeordnet zu sein. Durch eine Verschiebung der ersten LED 12 nach oben, unten, rechts oder links, kann die gewünschte Ausrichtung des abgestrahlten Fahrlichtbündels erreicht werden.

Die Sekundäroptik 14 definiert eine Lichtaustrittsöffnung für das Fahrlicht. Die Lichtaustrittsöffnung ist in einer Leiterplatte 16 vorgesehen, die kreisförmig ausgebildet ist und auf der mehrere zweite lichtemittierende Dioden 18 in konzentrischen Kreisen angeordnet sind. Die zweiten lichtemittierende Dioden 18 sind als weißes Licht abstrahlende Leuchtdioden ausgebildet und für das Abstrahlen von Signallicht vorgesehen. Aufgrund der geringeren geforderten Lichtstärke im Signallichtbetrieb müssen als zweite lichtemittierende Dioden 18 keine sogenannten Hochleistungs-LEDs vorgesehen sein. Bei Schienenfahrzeugen wird im allgemeinen im Signallichtbetrieb eine gleichmäßig erleuchtete Signalscheibe mit einem Durchmesser von 170mm gefordert. Die Abmessungen der Leiterplatte 16 liegt daher im Bereich eines Durchmessers von 170mm, um die geforderten Abmessungen der Signallscheibe zu realisieren. Die Hauptabstrahlrichtung der zweiten LEDs 18 liegt parallel zu einer Längsachse eines Schienenfahrzeugs. Demgegenüber ist, wie bereits ausgeführt wurde, die Hauptabstrahlrichtung des Fahrlichts um 5,5° nach unten geneigt.

Um im Signallichtbetrieb eine dunkle Stelle im Zentrum der Signalscheibe zu vermeiden, die aufgrund der geneigten Hauptabstrahlrichtung der ersten LED 12 bei Betrachtung in Fahrzeuglängsrichtung auch bei eingeschaltetem Fahrlicht auftreten würde, sind bei dem kombinierten Signal- und Fahrlichtscheinwerfer 10 Mittel vorgesehen, um im Signallichtbetrieb eine Lichtabstrahlung im Fahrlichtäbstrahlbereich, der durch die Sekundäroptik 14 definiert ist, in der zweiten Hauptabstrahlrichtung zu erzielen, die parallel zur Längsrichtung des Schienenfahrzeugs verläuft. Wie detailliert anhand der Fig. 4 erläutert werden wird, wird hierzu die erste LED 12 im Signallichtbetrieb relativ zur Sekundäroptik 14 verschoben. Beispielsweise wäre es aber auch möglich, die Sekundäroptik 14 zusammen mit der LED 12 zu verschwenken oder einklappbare Spiegel oder Linsen vorzusehen, um die Hauptabstrahlrichtung der LED 12 und der Sekundäroptik 14 zu verändern. Indem im Signallichtbetrieb sichergestellt wird, dass auch aus dem durch die Sekundäroptik 14 definierten Fahrlichtabstrahlbereich Licht in der zweiten Hauptabstrahlrichtung austritt, kann sichergestellt werden, dass die vollständige Signalscheibe des Scheinwerfers 10 erleuchtet ist. Gegebenenfalls muss durch Abstimmen der Lichtstärken der ersten LED 12 und der zweiten LEDs 18 eine gleichmäßige Erleuchtung der Signalscheibe bewirkt werden.

Die Darstellung der Fig. 2 zeigt einen kombinierten Signal- und Fahrlichtscheinwerfer 20 gemäß einer zweiten bevorzugten Ausführungsform der Erfindung. Im Unterschied zum Scheinwerfer 10 der Fig. 1 weist der Scheinwerfer 20 zwei erste LEDs 22 für die Abstrahlung von Fahrlicht auf. Jeder der ersten LEDs 22 ist eine eigene Sekundäroptik 24 zugeordnet, die sich teilweise überlappen, so dass sich ein in der Draufsicht achtförmiger Fahrlichtaustrittsbereich ergibt. Wie bei dem Scheinwerfer 10 der Fig. 1 sind bei dem Scheinwerfer 20 Mittel vorgesehen, um auch im Signallichtbetrieb eine gleichmäßige Erleuchtung der durch den Scheinwerfer 20 definierten Signalscheibe zu erzielen.

Die Darstellung der Fig. 3 zeigt eine seitliche Schnittansicht eines kombinierten Signal- und Fahrlichtscheinwerfers gemäß einer dritten Ausführungsform der Erfindung. Innerhalb eines Gehäuses 26 ist eine erste LED 28 zum Abstrahlen von Fahrlicht angeordnet. Die erste LED 28 ist als weiße Hochleistungs-LED ausgebildet und im Bereich der Rückwand des Gehäuses 26 befestigt. Die LED 28 ist mit einer Primäroptik versehen, die im dargestellten Fall als kuppelförmige Haube ausgebildet ist. Der ersten LED 28 ist eine Sekundäroptik 30 zugeordnet. Eine optische Achse der Sekundäroptik 30 ist durch eine strichpunktierte Linie 32 angedeutet und stellt gleichzeitig die Mittelachse des Gehäuses 26 dar. Die Sekundäroptik 30 ist mittels eines Abstandhalters 34 an einer Leiterplatte 36 angeordnet, die wiederum an Seitenwänden des Gehäuses 26 befestigt ist. Die Leiterplatte 36 weist eine zentrale, kreisförmige Öffnung 38 auf, die einen Fahrtlichtaustrittsbereich des dargestellten Scheinwerfers definiert. Von der ersten LED 28 abgestrahltes Licht tritt durch die Sekundäroptik 30 hindurch, passiert die zentrale Öffnung 38, um schließlich durch eine Abdeckscheibe 40 das Scheinwerfergehäuse zu verlassen. Wie in der Darstellung der Fig. 3 angedeutet ist, tritt Fahrlicht aus dem Scheinwerfer, um einen Winkel α nach unten gegenüber der Mittelachse 32 geneigt aus. Dies wird dadurch erreicht, dass die erste LED 28 nicht auf der Mittelachse 32, die mit der optischen Achse der Sekundäroptik 30 zusammenfällt, sondern gegenüber dieser nach oben verschoben angeordnet ist.

Auf einer, der ersten LED 28 abgewandten Vorderseite der Leiterplatte 36 sind mehrere zweite LEDs 42 angeordnet. Die zweiten LEDs 42 strahlen weißes Licht mit einer Hauptabstrahlrichtung ab, die parallel zur Mittelachse 32 liegt. Die zweiten Leuchtdioden 42 sind in konzentrischen Kreisen um die zentrale Öffnung 38 angeordnet. Im außenliegenden Randbereich der Leiterplatte 36 sind weitere Leuchtdioden 44 bzw. 46 angeordnet, deren Lichtabstrahlrichtung zur Mittelachse 32 nach oben bzw. unten geneigt ist. Bei der in der Darstellung der Fig. 3 unten angeordneten Leuchtdiode 44 wird eine gegenüber der Mittelachse 32 nach oben geneigte Lichtabstrahlrichtung dadurch erreicht, dass die Leiterplatte 36 im Randbereich abgewinkelt ist und die LED 44 auf diesem geneigten Bereich der Leiterplatte 36 befestigt ist.

Im Fall der in der Fig. 3 oben dargestellten LED 46 wird eine gegenüber der Mittelachse 32 nach unten geneigte Abstrahlrichtung dadurch erreicht, dass die LED 46 an einem Ende eines Lichtleitstabs 48 angeordnet ist, der in seinem Verlauf abgewinkelt ist, um an seinem, der Leiterplatte 36 abgewandten Ende einen nach unten geneigten Lichtaustritt zu bewirken. Durch die geneigt angeordnete LED 44 und die LED 46 mit dem abgewinkelten Lichtleiterstab 48 kann eine Lichtabstrahlung in einem Bereich von +/- 45° zur Mittelachse 32 erreicht werden. In der Darstellung der Fig. 3 würde mit den LEDs 44 und 46 eine Lichtabstrahlung um +/- 45° in einer vertikalen Ebene erreicht. Üblicherweise wird jedoch eine Lichtabstrahlrichtung von +/- 45° zur Mittelachse 32 in einer horizontalen Ebene angestrebt. Hierzu werden die LEDs 44 und 46 gegenüber der Darstellung der Fig. 3 um 90° um die Mittelachse 32 versetzt angeordnet, wie in der Fig. 3 anhand einer weiteren LED 46 mit Lichtleitstab 48 angedeutet ist.

Im Signallichtbetrieb wird die erste LED 28 nicht betrieben, so dass an und für sich im Fahrlichtaustrittsbereich, der durch die Öffnung 38 definiert ist, ein dunkles Loch in der Signalscheibe entstünde. Um dies zu vermeiden, ist eine dritte lichtemittierende Diode 50 vorgesehen, die unmittelbar benachbart zu der ersten LED 28 an der Rückwand des Gehäuses 26 angeordnet ist. Wie der Darstellung der Fig. 3 zu entnehmen ist, ist die dritte LED 50 gegenüber der Mittelachse 32, die mit der optischen Achse der Sekundäroptik 30 zusammenfällt, nach unten verschoben angeordnet. Dies ist aus Bauraumgründen erforderlich, da die erste LED 28 nicht so weit von der optischen Achse beabstandet ist, dass die Anordnung der dritten LED 50 auf der optischen Achse der Sekundäroptik 30 möglich wäre. Um dennoch eine Lichtabstrahlung durch die dritte LED 50 parallel zur Mittelachse 32 zu erreichen, ist die dritte LED 50 gegenüber der Mittelachse 32 nach unten um einen Winkel β geneigt angeordnet. Der Winkel β iat abhängig vom Abstand der dritten LED 50 zur optischen Achse, vom Abstand der dritten LED 50 von der Sekundäroptik 30 und von der Winkelablenkung des Lichts in der Sekundäroptik 30. Zusammen mit der Sekundäroptik 30 wird dadurch ein zur Mittelachse 32 paralleler Lichtaustritt aus der Sekundäroptik 30 und dem Scheinwerfer erreicht. Durch Betreiben der dritten LED 50 im Signallichtbetrieb wird infolgedessen ein dunkles Loch im Zentrum der Signalscheibe vermieden. Die dritte LED 50 ist ebenfalls als Hochleistungs-LED für weißes Licht ausgebildet, um auf Höhe der Leiterplatte 36 die gleiche Leuchtdichte bereitstellen zu können, wie die zweiten LEDs 42, 44 und 46. Um eine gleichmäßige Erleuchtung der Signalscheibe sicherzustellen, werden der Betriebsstrom der dritten LED 50 sowie der Betriebsstrom der zweiten LED 42, 44, 46 aufeinander abgestimmt.

In der seitlichen Schnittansicht der Fig. 4 ist ein mit der Fig. 3 vergleichbarer aber verbesserter Scheinwerfer dargestellt. Bei der Anordnung der Fig. 3 wird zwar im Signallichtbetrieb eine gleichmäßig erleuchtete Signalscheibe erzeugt, es können jedoch Lichtstärkemaxima oberhalb der Mittelachse 32 auftreten, die in der Funktion "Signallicht weiß, abgeblendet" insbesondere bei Verwendung des Scheinwerfers als obere Leuchte für einen Fahrzeugführer störend sein können. Um solche Lichtstärkemaxima oberhalb der Mittelachse 32 beim Betrieb der dritten LED 50 zu vermeiden, ist in Abstrahlrichtung gesehen vor der dritten LED 50 eine Streuscheibe 51 angeordnet. Die Streuscheibe 51 ist dabei nicht direkt vor der dritten LED 50, sondern leicht nach unten versetzt zu dieser angeordnet. Die Anordnung der Streuscheibe 51 wird so gewählt, dass einerseits der Strahlengang der ersten LED 28 nicht behindert wird, so dass im Fahrlichtbetrieb keine Abschattungen auftreten. Zum anderen wird die Streuscheibe 51 so angeordnet, dass Lichtstärkemaxima, die von der dritten LED 50 herrühren und die oberhalb der Mittelachse 32 liegen, zuverlässig unterdrückt sind. Die Lage der Streuscheibe 51 kann dabei bezüglich ihres Abstandes zur dritten LED 50 und bezüglich ihres Winkels zur dritten LED 50 variiert werden. Die Streuscheibe 51 kann als Rillenstreuscheibe ausgebildet sein, die mit senkrechten Rillen versehen ist. Es ist aber auch möglich, die Streuscheibe 51 in Mikroprismentechnik zu realisieren. Die Streuelemente der Streuscheibe 51 können dabei auf einer, der dritten Leuchtdiode 50 abgewandten Seite der Streuscheibe 51 angeordnet sein.

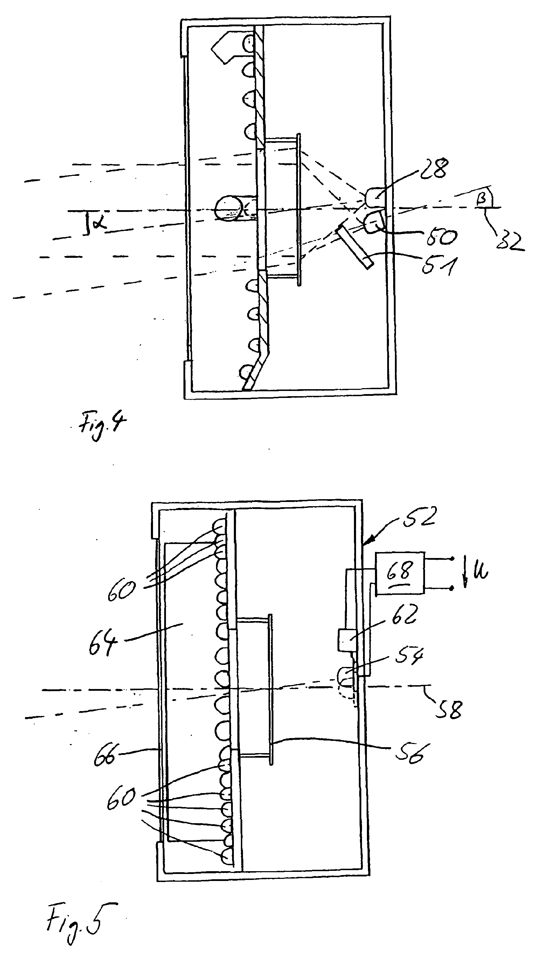

Die Darstellung der Fig. 5 zeigt einen Signal- und Fahrlichtscheinwerfer 52 gemäß einer weiteren Ausführungsform der Erfindung. Auch bei dem Scheinwerfer 52 ist eine erste LED 54 zum Abstrahlen von Fahrlicht an einer Rückwand eines Scheinwerfergehäuses angeordnet und durchstrahlt eine Sekundäroptik 56. Gegenüber einer optischen Achse 58 der Sekundäroptik 56 ist die erste LED 54 nach oben versetzt, um eine nach unten geneigte Hauptabstrahlrichtung zu erzielen. Weiterhin ist der Scheinwerfer 52 mit zweiten LEDs 60 versehen, die eine zur optischen Achse 58 parallele Abstrahlung von Signallicht bewirken. Die optische Achse 58 fällt mit einer Mittelachse des Scheinwerfers 52 zusammen, die in einem Schienenfahrzeug parallel zu dessen Längsachse ausgerichtet würde. Die zweiten LEDs 60 sind auf einer Leiterplatte angeordnet, die eine zentrale Öffnung zur Definition des Fahrlichtaustrittsbereichs aufweist.

Um im Signallichtbetrieb mittels der ersten LED 54 einen Lichtaustritt aus dem Fahrlichtaustrittsbereich parallel zur optischen Achse 58 bzw. der Mittelachse des Scheinwerfers 52 zu erreichen, ist die erste LED 54 an der Rückwand des Scheinwerfers 52 verschiebbar angeordnet. Beispielsweise ist die LED 54 auf einem kulissengeführten Schlitten angeordnet, der in der Darstellung der Fig. 5 nach unten verschoben werden kann. Die erste LED 54 kann dadurch nach unten verschoben werden, bis die optische Achse ihrer Primäroptik mit der optischen Achse 58 der Sekundäroptik 56 zusammenfällt. In dieser verschobenen Stellung, die in der Darstellung der Fig. 5 gestrichelt angedeutet ist, wird von der LED 54 Licht mit einer Hauptabstrahlrichtung abgestrahlt, die parallel zur optischen Achse 58 liegt. Um im Fahrlichtaustrittsbereich im Signallichtbetrieb die gleiche Lichtstärke, wie sie von den zweiten Leuchtdioden 60 abgegeben wird, zu erzielen, wird gleichzeitig mit der Verschiebung der ersten LED 54 nach unten auf die optische Achse 58 deren Betriebsstrom verringert. Eine Verschiebung der ersten LED 54 erfolgt mittels eines Hubmagneten 62, der an der Rückwand des Gehäuses des Scheinwerfers 52 angeordnet ist. Der Hubmagnet 62 wird mittels eines Steuergeräts 68 angesteuert, das auch die Steuerung des Betriebsstroms des LED 54 und der LEDs 60 übernimmt.

Um mittels der zweiten LED 60 eine Erkennbarkeit der erleuchteten Signalscheibe in einem Winkel von +/- 45° zur Mittellängsachse 58 des Gehäuses in einer horizontalen Ebene zu erreichen, ist eine innenliegende Oberfläche 64 der umlaufenden Seitenwand des Scheinwerfergehäuses 52 verspiegelt. Von den zweiten LEDs 60 in Richtung auf die Oberfläche 64 abgestrahlte Lichtstrahlen werden dadurch reflektiert und durch die Abdeckscheibe 66 abgestrahlt.

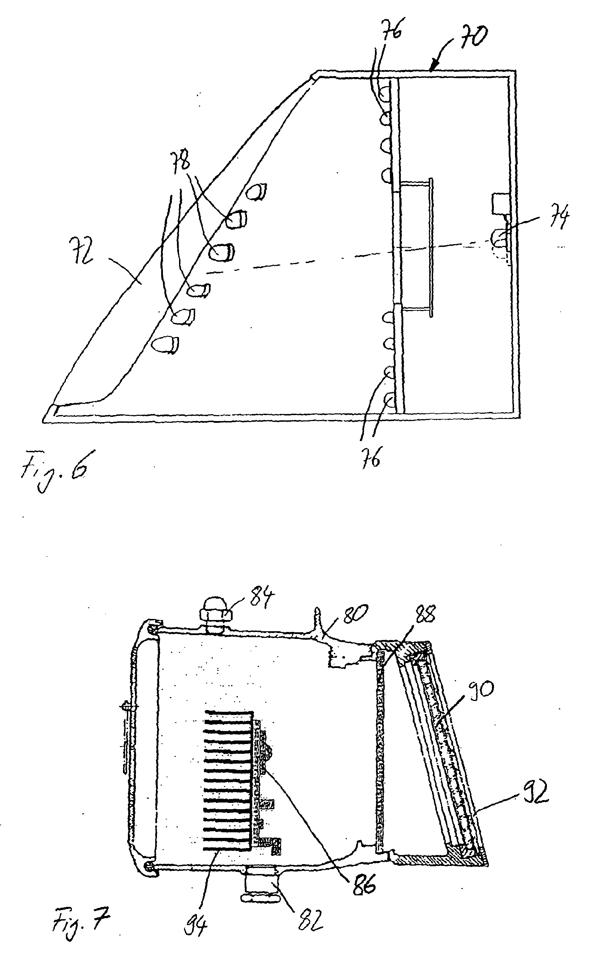

Ein weiterer erfindungsgemäßer Scheinwerfer 70 ist in der seitlichen Schnittansicht der Fig. 6 dargestellt. Der Scheinwerfer 70 ist ähnlich zu dem in der Fig. 5 und der Fig. 1 dargestellten Scheinwerfer aufgebaut und die erste LED 74 ist an der Rückwand des Scheinwerfergehäuses verschiebbar, um eine Lichtabstrahlung unter verschiedenen Winkeln zu erreichen. Der Scheinwerfer 70 ist für aerodynamisch gestaltete Schienenfahrzeuge vorgesehen. Aufgrund der aerodynamischen Frontgestaltung eines solchen Schienenfahrzeugs muss eine Abdeckscheibe 72 stark geneigt zu einer Fahrzeughochrichtung angeordnet sein. Aus der sich dadurch ergebenden Gehäuseform eines schräg abgeschnittenen Kreiszylinders sind die erste Lichtdiode 74 und die zweiten Lichtdioden 76 auf der Leiterplatte wesentlich weiter von der Abdeckscheibe 72 beabstandet, als dies bei den zuvor erläuterten Ausführungsformen der Fall ist. Eine Lichtabstrahlung in einem Winkel von +/- 45° zu einer Mittellängsachse des Scheinwerfers 70 lässt sich daher nicht mehr durch Maßnahmen im Bereich der Leiterplatte, auf der die zweiten Leuchtdioden 76 angeordnet sind, erreichen, da von diesen zweiten Leuchtdioden in einem Winkel von +/- 45° zur Mittellängsachse abgestrahltes Licht durch die in Abstrahlrichtung vor der Leiterplatte liegenden Gehäuseseitenwände abgeschattet würde. Zur Erzielung einer Lichtabstrahlung im geforderten Winkelbereich sind daher weitere Leuchtdioden 78 unmittelbar hinter der geneigten Abdeckscheibe 72 angeordnet. Diese weiteren zweiten LEDs 78 sind gegenüber der Mittellängsachse des Scheinwerfers 70 geneigt, um die geforderte Lichtabstrahlung in einem Winkelbereich von +/- 45° zur Mittellängsachse in horizontaler Richtung sicherzustellen.

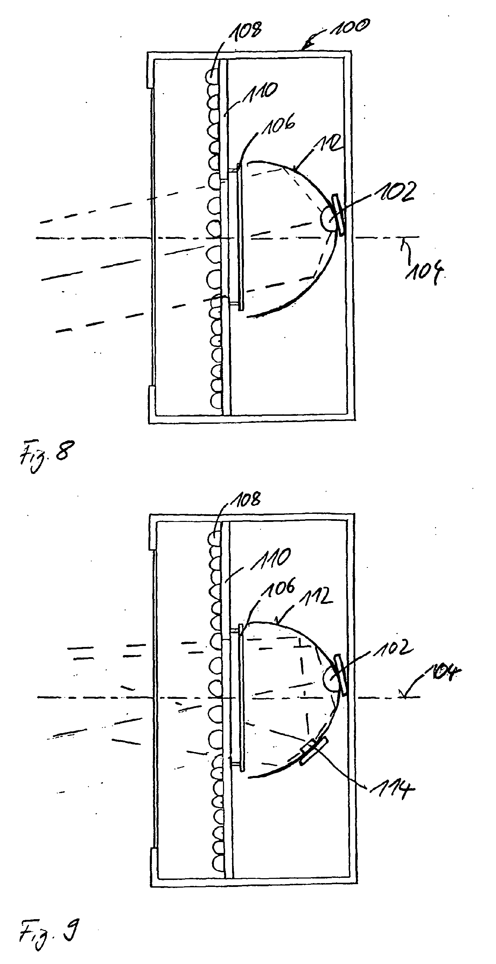

Eine weitere Ausführungsform eines erfindungsgemäßen Signal- und Fahrlichtscheinwerfers ist in der Fig. 7 in einer Schnittansicht dargestellt. Innerhalb eines Scheinwerfergehäuses 80, das mit einer Belüftung 82 und einer Entlüftung 84 versehen ist, ist eine weiße Hochleistungs-LED 86 angeordnet. Die LED 86 weist beispielsweise eine Leistung von 5 Watt auf und wird durch eine Konstantstromquelle mit elektrischer Energie versorgt. Die LED 86 ist auf der optischen Achse und im Abstand der Brennweite einer Fresnellinse 88 angeordnet. Durch die Anordnung der LED 86 und der Fresnellinse 88 wird das von der LED 86 abgestrahlte Licht in einer Hauptkeule fokussiert, die als Fahrlicht dient. In Abstrahlrichtung gesehen ist hinter der Fresnellinse 88 eine Streuscheibe 90 angeordnet, die wiederum von einer Abdeckscheibe 92 gefolgt wird. Mittels der Streuscheibe 90 wird aus der Hauptkeule des von der LED 86 abgestrahlten und durch die Fresnellinse 88 fokussierten Lichts eine Nebenkeule ausgekoppelt. Während die Hauptkeule beispielsweise unter 5,5° nach unten geneigt zur Mittellängsachse austritt, sorgt die mittels der Streuscheibe 90 ausgekoppelte Nebenkeule dafür, dass in Richtung der Mittellängsachse kein dunkler Fleck in der Signalscheibe des erfindungsgemäßen Signal- und Fahrlichtscheinwerfers auftritt. Die Abdeckscheibe 92 übernimmt lediglich Schutz- und Abdeckfunktionen, indem sie das Gehäuse 80 in Fahrtrichtung gesehen abschließt.

Die LED 86 ist innerhalb des Gehäuses 80 auf einer Leiterplatte montiert, auf der sich auch die für die LED 86 erforderliche Ansteuerelektronik befindet. Die Leiterplatte wiederum ist auf einem Kühlkörper 94 montiert, der für die erforderliche Wärmeabfuhr sorgt. Innerhalb des Gehäuses 80 können weitere LEDs angeordnet werden, um ein zufriedenstellendes Signalbild im Signallichtbetrieb zu erreichen.

Eine weitere Ausführungsform eines erfindungsgemäßen Signal- und Fahrlichtscheinwerfers ist in der seitlichen Schnittansicht der Fig. 8 dargestellt. Der in der Fig. 8 dargestellte Signal- und Fahrlichtscheinwerfer ist grundsätzlich vergleichbar zu dem in der Fig. 3 dargestellten Scheinwerfer aufgebaut. Innerhalb eines Scheinwerfergehäuses 100 ist eine weiße Hochleistungs-LED 102 angeordnet, die mit einem Kühlkörper versehen ist und gegenüber einer Mittelachse 104 des Scheinwerfers nach oben versetzt ist. Zusammen mit einer Sekundäroptik 106 ergibt sich eine nach unten gerichtete Hauptabstrahlrichtung der Hochleistungs-LED 102, die als Fahrlicht verwendet wird. Mehrere zweite LEDs 108 sind eine zentrale Ausnehmung einer Leiterplatte 110 umgebend auf einer Vorderseite der Leiterplatte 110 angeordnet und werden im Signallichtbetrieb eingesetzt. Die weiße Hochleistungs-LED 102 ist von einer Rückseite der Leiterplatte 110 beabstandet an einer Rückwand des Scheinwerfergehäuses 100 angeordnet. Aufgrund des Abstandes, den die weiße Hochleistungs-LED 102 von der zentralen Öffnung in der Leiterplatte 110 einnimmt und aufgrund des relativ breiten Abstrahlwinkels der weißen Hochleistungs-LED 102 würde ein Anteil des von der Hochleistungs-LED 102 abgegebenen Lichts nicht durch die Sekundäroptik 106 und die zentrale Öffnung der Leiterplatte 110 fallen, sondern Abschnitte der Rückseite der Leiterplatte 110 beleuchten, die die zentrale Öffnung umgeben. Dieser Anteil des Lichts wäre damit für die Nutzung als Fahrlicht verloren. Die weiße Hochleistungs-LED 102 ist daher innerhalb eines Reflektors 112 angeordnet, der dafür sorgt, dass im wesentlichen alles Licht, das von der weißen Hochleistungs-LED 102 abgegeben wird, auf die Sekundäroptik 106 gerichtet wird und somit als Fahrlicht genutzt werden kann.

Um dennoch im Signallichtbetrieb die geforderte durchgängige weiße Signalscheibe zu gewährleisten, kann der Reflektor 112 so geformt sein, dass ein Teil des von der weißen Hochleistungs-LED 102 abgebenen Lichts parallel zur Mittelachse 104 austritt. Dadurch ist sichergestellt, dass im Signallichtbetrieb oder im kombinierten Fahrlicht- und Signallichtbetrieb bei Betrachtung längs der Mittelachse 104 eine gleichmäßig erleuchtete Signalscheibe erzeugt wird, die keinen abgedunkelten Bereich an der zentralen Ausnehmung der Leiterplatte 110 aufweist.

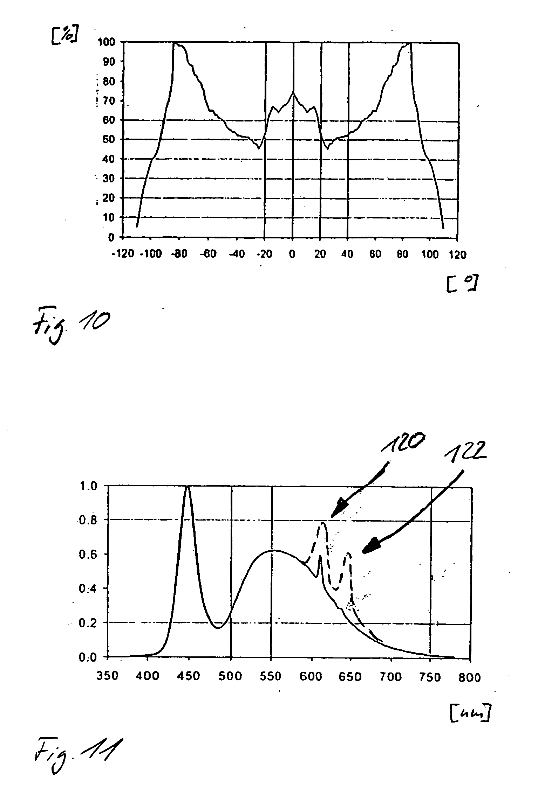

Eine weitere Ausführungsform eines erfindungsgemäßen Signal- und Fahrlichtscheinwerfers ist in der seitlichen Schnittansicht der Fig. 9 dargestellt. Der in der Fig. 9 dargestellte erfindungsgemäße Scheinwerfer ist vergleichbar zu dem in der Fig. 8 dargestellten Scheinwerfer aufgebaut und gegenüber diesem lediglich noch mit einer weiteren LED 114 versehen. Die LED 114 ist innerhalb des Reflektors 112 angeordnet, aber versetzt gegenüber der Hochleistungs-LED 102. Die weitere LED 114, die ebenfalls weißes Licht abgibt, ist so innerhalb des Reflektors 112 angeordnet, dass von ihr abgegebenes Licht nach Passieren der Sekundäroptik 106 hauptsächlich parallel zur Mittelachse 104 austritt. Die weitere LED 114 sorgt damit verlässlich dafür, dass im Signallichtbetrieb im Bereich der zentralen Ausnehmung der Leiterplatte 110 kein dunkler Bereich entsteht, sondern eine gleichmäßig ausgeleuchtete Signalscheibe geschaffen ist.

Wie in der Darstellung der Fig. 9 zu erkennen ist, ist die weitere LED 114 extrem flach ausgebildet und als sogenannte side-emitting-LED aufgebaut. Solche sogenannten side-emitting-LEDs geben Licht über einen sehr großen Winkelbereich ab und eine beispielshafte Lichtstärkeverteilung der LED 114 in Prozent über dem Raumwinkel ist in dem Diagramm der Fig. 10 dargestellt. Es ist zu erkennen, dass die LED 114 trotz ihrer sehr flachen Bauweise Licht in einem Winkel von ± 110° abgibt. Dadurch kann im Signallichtbetrieb dafür gesorgt werden, dass die Sekundäroptik 106 gleichmäßig ausgeleuchtet ist, so dass eine gleichmäßig erleuchtete Signalscheibe realisiert ist. Aufgrund ihrer extrem flachen Bauweise stört die weitere LED 114 jedoch den Strahlengang der Hochleistungs-LED 102 nicht oder lediglich unwesentlich, so dass keine Abschattungen des Fahrlichts auftreten. Anstelle einer einzigen weiteren LED 114 können auch mehreren side-emitting-LEDs im Reflektor 112 angeordnet werden, solange diese die Abstrahlung des Fahrlichts durch die weiße Hochleistungs-LED 102 nicht oder lediglich unwesentlich stören. Bei der in der Fig. 9 dargestellten Ausführungsform ist die weitere LED 114 gegenüber der Mittelachse 104 nach unten versetzt und in Abstrahlrichtung gegenüber der weißen Hochleistungs-LED 102 nach vorne versetzt auf der Innenwandung des Reflektors 112 angeordnet. Ein Kühlkörper der weiteren LED 114 ist auf einer Rückseite des Reflektors 112 platziert.

Wenn bei den erfindungsgemäßen kombinierten Signal- und Fahrlichtscheinwerfern lediglich das Fahrlicht eingeschaltet ist, am Beispiel des Scheinwerfers der Fig. 9 lediglich die weiße Hochleistungs-LED 102, wird in Richtung der Mittelachse 104 lediglich eine geringe Lichtstärke abgegeben, so dass der Scheinwerfer in Richtung der Mittelachse 104 nicht mehr als Signallicht, beispielsweise mit einem geforderten Durchmesser 170 mm, erkannt wird. Um dies zu gewährleisten, werden auch im Fahrlichtbetrieb die zweiten LEDs 108 eingeschaltet. Zusätzlich können dann, wenn der erfindungsgemäße Scheinwerfer als obere Leuchte an einem Schienenfahrzeug eingesetzt wird, die zweiten LEDs 108 im Fahrlichtbetrieb, d.h. zusammen mit der weißen Hochleistungs-LED 102, mehr Licht abgeben, als für die Funktion "Signallicht weiß" an und für sich erforderlich ist. Im Signallichtbetrieb werden die zweiten LEDs 108 dann mit der nominalen Lichtstärke betrieben.

In der Darstellung der Fig. 11 zeigt der durchgezogene Kurvenverlauf das Spektrum einer konventionellen weißen Hochleistungs-LED, während der gestrichelt dargestellte Verlauf im Bereich zwischen etwa 600 und 700 Nm das Spektrum der erfindungsgemäßen Hochleistungs-LED 102 zeigt. Außerhalb des Bereiches zwischen 600 Nm und 700 Nm verläuft das Spektrum der LED 102 deckungsgleich mit der dargestellten durchgezogenen Kurve. Dabei ist zu erkennen, dass das Spektrum zusätzlich zum normalen Spektrum einer weißen Hochleistungs-LED das mit einer durchgezogenen Linie aufgetragen ist, Nebenmaxima 120, 122 bei etwa 600 Nm, entsprechend einer Lichtfarbe amber, sowie bei etwa 640 Nm, entsprechend einer Lichtfarbe rot, aufweist, wobei diese Nebenmaxima gestrichelt angedeutet sind. Gegenüber konventionellen weißen Leuchtdioden, die lediglich minimale Rot- bzw. Amber-Anteile im Spektrum aufweisen, kann dadurch die Erkennbarkeit roter und gelber Retroreflexsignale im Fahrlichtbetrieb deutlich verbessert werden.

Dies ist insbesondere im Fahrlichtbetrieb von Bedeutung, da beim Signallichtbetrieb zwar zusätzlich rote LEDs eingeschaltet werden können, im Fahrlichtbetrieb ist dies jedoch nicht möglich, da das von der weißen Hochleistungs-LED 102 abgegebene Licht gegenüber der Mittelachse 104 und somit gegenüber einer Achse der roten LEDs geneigt ist. Darüber hinaus ist der Lichtstärkenunterschied zwischen dem von der weißen Hochleistungs-LED 102 abgebenen Licht und dem von eventuellen roten LEDs abgegebenen Licht derartig groß ist, dass von roten LEDs kein ausreichender Lichtstrom erzeugt werden könnten. Schließlich können die roten LEDs in axialer Richtung wie eine rote Aura der weißen Hochleistungs-LED wirken und dadurch aus bestimmten Winkeln mit einem Zugschlusssignal verwechselt werden. Erfindungsgemäß wird daher die weiße Hochleistungs-LED 102 so ausgelegt, dass sie nennenswerte Spektralanteile bei 600 Nm sowie bei 640 Nm aufweist. Dies kann beispielsweise durch Hochleistungs-LEDs erfolgen, die mit mindestens je einem grünem, roten und blauen Chip in einem Gehäuse versehen sind und bei denen der Farbort des jeweils abgegebenen Lichts durch unterschiedliche Ansteuerung der einzelnen Chips nahezu beliebig festgelegt und auch individuell eingestellt werden kann.

## Patentansprüche

1. Kombinierter Signal- und Fahrlichtscheinwerfer für Schienenfahrzeuge, mit wenigstens einem ersten Leuchtmittel (12, 22, 28, 54, 74, 86, 102) zum Abstrahlen von Fahrlicht einer ersten Leuchtstärke mit einer ersten Hauptabstrahlrichtung, mehreren zweiten, als lichtemittierende Dioden ausgebildeten Leuchtmitteln (18, 42, 60, 76, 108) zum Abstrahlen von Signallicht mit einer zweiten, geringeren Leuchtstärke mit einer zweiten Hauptabstrahlrichtung, die von der ersten Hauptabstrahlrichtung verschieden ist, wobei die zweiten lichtemittierenden Dioden (18, 42, 60, 76, 108) auf einer Leiterplatte (16, 36, 110), eine Öffnung (38) in der Leiterplatte (16, 36, 110) umgebend angeordnet sind und das Fahrlicht durch das erste Leuchtmittel (12, 22, 28, 54, 74, 86, 102) aus einem, in der zweiten Hauptabstrahlrichtung gesehen, von den zweiten Leuchtmitteln (18, 42, 60, 76, 108) umgebenen Fahrlichtabstrahlbereich (38) abgestrahlt wird, **dadurch gekennzeichnet, dass** das wenigstens eine erste Leuchtmittel als lichtemittierende Diode (12, 22, 28, 54, 74, 86, 102) ausgebildet ist und mit einer Optik (14, 24, 30, 56, 106) versehen ist, wobei die Optik (14, 24, 30, 56, 106) in einem Bereich der Öffnung (38) der Leiterplatte (16, 36, 110) angeordnet ist, und dass Mittel vorgesehen sind, um im Signallichtbetrieb eine Lichtabstrahlung im Fahrlichtabstrahlbereich (38) in der zweiten Hauptabstrahlrichtung zu erzielen.

2. Kombinierter Signal- und Fahrlichtscheinwerfer nach Anspruch 1, **dadurch gekennzeichnet, dass** die wenigstens eine erste lichtemittierende Diode (54, 74) relativ zu den zweiten lichtemittierenden Dioden (60, 76) verschieb- und/oder verschwenkbar angeordnet ist.

3. Kombinierter Signal- und Fahrlichtscheinwerfer nach Anspruch 1 oder 2, **dadurch gekennzeichnet, dass** im Bereich der ersten lichtemittierenden Diode (28) eine dritte lichtemittierende Diode (50) zum Abstrahlen von Signallicht parallel zur zweiten Hauptabstrahlrichtung im Fahrlichtabstrahlbereich vorgesehen ist.

4. Kombinierter Signal- und Fahrlichtscheinwerfer nach einem der vorstehenden Ansprüche, **dadurch gekennzeichnet, dass** in der ersten Hauptabstrahlrichtung hinter der Optik (88) der ersten lichtemittierenden Diode (86) eine Streuoptik (90) zur Ausleuchtung einer Nebenkeule in der zweiten Hauptabstrahlrichtung vorgesehen ist.

5. Kombinierter Signal- und Fahrlichtscheinwerfer nach einem der vorstehenden Ansprüche, **dadurch gekennzeichnet, dass** die zweiten lichtemittierenden Dioden (42) konzentrisch angeordnet sind, wobei am äußeren Rand mehrere weitere lichtemittierende Dioden (44, 78) in einem Winkel zur zweiten Hauptabstrahlrichtung angeordnet und/oder Mittel (48, 64) zum Umlenken des abgestrahlten Lichts vorgesehen sind.

6. Kombinierter Signal- und Fahrlichtscheinwerfer nach einem der vorstehenden Ansprüche, **dadurch gekennzeichnet, dass** Mittel (68) zum Betreiben der lichtemittierenden Dioden mit veränderlicher Stromstärke vorgesehen sind.

7. Kombinierter Signal- und Fahrlichtscheinwerfer nach einem der vorstehenden Ansprüche, **dadurch gekennzeichnet, dass** die zweiten lichtemittierenden Dioden (18, 42, 60, 76, 108) und/oder weitere lichtemittierende Dioden (44, 46, 78) farbiges Licht abstrahlende lichtemittierende Dioden aufweisen.

8. Kombinierter Signal- und Fahrlichtscheinwerfer nach Anspruch 7, **dadurch gekennzeichnet, dass** bei Signallicht oder Fahrtlichtbetrieb mit weißem Licht zusätzlich rotes Licht und/oder grünes Licht emittierende Dioden eingeschaltet sind.

9. Kombinierter Signal- und Fahrlichtscheinwerfer für Schienenfahrzeuge nach einem der vorstehenden Ansprüche, **dadurch gekennzeichnet, dass** das wenigstens eine erste Leuchtmittel mit den zweiten lichtemittierenden Dioden (18, 42, 60, 76, 108) in einem gemeinsamen Gehäuse (26, 52, 70, 80, 100) angeordnet ist.

## Claims

1. Combined signal and driving light for rail vehicles, with at least one first lamp (12, 22, 28, 54, 74, 86, 102) for radiating driving light of first luminous intensity with a first main radiation direction, several second lamps formed as light emitting diodes (18, 42, 60, 76, 108) for radiating signal light with second weaker luminous intensity, with a second main radiation direction, which is different than the first main radiation direction, wherein the second light emitting diodes (18, 42, 60, 76, 108) are arranged on a printed board (16, 36, 110) around an opening (38) in the printed board (16, 36, 110) and the driving light is radiated by the first lamp (12, 22, 28, 54, 74, 86, 102) from a driving light radiation area (38), viewed in the second main radiation direction, surrounded by the second lamps (18, 42, 60, 76, 108), **characterised in that** the at least one first lamp is formed as a light emitting diode (12, 22, 28, 54, 74, 86, 102) and provided with an optical means (14, 24, 30, 56, 106), wherein the optical means (14, 24, 30, 56, 106) is located in the opening (38) area of the printed board (16, 36, 110), and that means are provided in order to attain during signal light operation light radiation within the driving light radiation area (38) in the second main radiation direction.

2. Combined signal and driving light according to claim 1, **characterised in that** the at least one first light emitting diode (54, 74) is located in a displaceable and/or swivellable manner relative to the second light emitting diodes (60, 76).

3. Combined signal and driving light head lamp according to claim 1 or 2, **characterised in that** in the range of the first light emitting diode (28) a third light emitting diode (50) is provided for radiating signal light parallel to the second main radiating direction in the driving light radiating range.

4. Combined signal and driving light according to one of the preceding claims, **characterised in that** in the first main radiation direction behind the optic means (88) of the first light emitting diode (86) a scattering optic (90) for illuminating a minor lobe is provided in the second main radiation direction.

5. Combined signal and driving light according to one of the preceding claims, **characterised in that** the second light emitting diodes (42) are concentrically arranged, wherein on the outer edge several further light emitting diodes (44,78) are arranged at an angle to the second main radiation direction and/or means (48,64) are provided for deflecting the radiated light.

6. Combined signal and driving light according to one of the preceding claims, **characterised in that** the means (68) are provided for operating the light emitting diodes with changeable current intensity.

7. Combined signal and driving light according to one of the preceding claims, **characterised in that** the second light emitting diodes (18, 42, 60, 76, 108) and/or further light emitting diodes (44, 46, 78) feature coloured light emitting diodes.

8. Combined signal and driving light according to claim 7, **characterised in that**, for signal light or driving light operation with white light, additional red light and/or green light emitting diodes are switched on.

9. Combined signal and driving light for rail vehicles according to one of the preceding claims, **characterised in that** at least a first lamp is located with the second light emitting diodes (18, 42, 60, 76, 108) in one common housing (26, 52, 70, 80, 100).

## Revendications

1. Phare combiné de signalisation et de feu de croisement pour véhicules sur rails, comprenant au moins un premier moyen d'éclairage (12, 22, 28, 54, 74, 86, 102) destiné à émettre de la lumière de croisement d'une première intensité lumineuse ayant une première direction d'émission principale, plusieurs deuxièmes moyens d'éclairage (18, 42, 60, 76, 108) réalisés comme des diodes électroluminescentes, destinés à émettre de la lumière de signalisation d'une deuxième intensité lumineuse moindre et ayant une deuxième direction d'émission principale différente de la première direction d'émission principale, les deuxièmes diodes électroluminescentes (18, 42, 60, 76, 108) étant disposées sur une plaquette à circuit imprimé (16, 36, 110) en entourant une ouverture (38) dans la plaquette à circuit imprimé (16, 36, 110) et la lumière de croisement étant émise par le premier moyen d'éclairage (12, 22, 28, 54, 74, 86, 102) à partir d'une zone d'émission de lumière de croisement (38) qui, vue dans la deuxième direction d'émission principale, est entourée des deuxièmes moyens d'éclairage (18, 42, 60, 76, 108), **caractérisé en ce qu'**au moins un premier moyen d'éclairage est réalisé comme diode électroluminescente (12, 22, 28, 54, 74, 86, 102) et est muni d'un dispositif optique (14, 24, 30, 56, 106), le dispositif optique (14, 24, 30, 56, 106) étant placé dans une partie de l'ouverture (38) de la plaquette à circuit imprimé (16, 36, 110), et **en ce que** des moyens sont prévus afin d'obtenir, en mode lumière de croisement, une émission lumineuse dans la zone d'émission de la lumière de croisement (38), dans la deuxième direction d'émission principale.

2. Phare combiné de signalisation et de feu de croisement selon la revendication 1, **caractérisé en ce qu'**au moins une première diode électroluminescente (54, 74) est placée de manière coulissante et/ou pivotante par rapport aux deuxièmes diodes électroluminescentes (60, 76).

3. Phare combiné de signalisation et de feu de croisement selon la revendication 1 ou 2, **caractérisé en ce que**, dans la partie de la première diode électroluminescente (28), une troisième diode électroluminescente, destinée à émettre de la lumière de croisement parallèlement à la deuxième direction d'émission principale, est prévue dans la zone d'émission de lumière de croisement.

4. Phare combiné de signalisation et de feu de croisement selon l'une quelconque des revendications précédentes, **caractérisé en ce que**, dans la première direction d'émission principale, un dispositif optique de dispersion (90) destiné à éclairer un lobe secondaire dans la deuxième direction d'émission principale est prévu derrière le dispositif optique (88) de la première diode électroluminescente (86).

5. Phare combiné de signalisation et de feu de croisement selon l'une quelconque des revendications précédentes, **caractérisé en ce que** les deuxièmes diodes électroluminescentes (42) sont placées de manière concentrique, plusieurs diodes électroluminescentes supplémentaires (44, 78) étant placées sur le bord extérieur en formant un angle avec la deuxième direction d'émission principale et/ou des moyens (48, 64) étant prévus pour renvoyer la lumière émise.

6. Phare combiné de signalisation et de feu de croisement selon l'une quelconque des revendications précédentes, **caractérisé en ce que** des moyens (68) destinés au fonctionnement des diodes électroluminescentes avec une intensité de courant variable sont prévus.

7. Phare combiné de signalisation et de feu de croisement selon l'une quelconque des revendications précédentes, **caractérisé en ce que** les deuxièmes diodes électroluminescentes (18, 42, 60, 76, 108) et/ou les diodes électroluminescentes supplémentaires (44, 46, 78) présentent des diodes émettant de la lumière colorée.

8. Phare combiné de signalisation et de feu de croisement selon la revendication 7, **caractérisé en ce qu'**en cas de lumière de signalisation ou de fonctionnement mode croisement avec de la lumière blanche, des diodes émettant de la lumière rouge et/ou de la lumière verte sont raccordées en plus.

9. Phare combiné de signalisation et de feu de croisement selon l'une quelconque des revendications précédentes, **caractérisé en ce qu'**au moins un premier moyen d'éclairage est disposé dans un boîtier commun (26, 52, 70, 80, 100) avec les deuxièmes diodes électroluminescentes (18, 42, 60, 76,108).
